# EUROPÄISCHE PATENTSCHRIFT

(11) **EP 0 789 800 B1**
(45) Veröffentlichungstag und Bekanntmachung des Hinweises auf die Patenterteilung: **25.03.1998**
(21) Anmeldenummer: 95936563.6
(22) Anmeldetag: 27.10.1995
(51) Int. Cl.: E01C 19/20, A01C 15/12

(54) **STREUMASCHINE**
SPREADING MACHINE
MACHINE D'EPANDAGE

(30) Priorität: 03.11.1994 DE 4439254
(43) Veröffentlichungstag der Anmeldung: 20.08.1997
(73) Patentinhaber: WOLF-Geräte GmbH Vertriebsgesellschaft KG, D-57518 Betzdorf/Sieg (DE)
(72) Erfinder: SCHÜTZ, Eberhard, D-57567 Daaden (DE)
(74) Vertreter: Koch, Günther, Dipl.-Ing.
(86) Internationale Anmeldenummer: EP9504229
(87) Internationale Veröffentlichungsnummer: WO9614472

(56) Entgegenhaltungen:
- DE-U- 8 709 657
- FR-A- 1 087 953

## Beschreibung

Die Erfindung bezieht sich auf eine Streumaschine mit einem das Streugut aufnehmenden trogartigen Behälter, der nach unten konvergierende Wände aufweist, die in einer quer zur Fahrtrichtung verlaufenden Austragsöffnung münden, in der eine das Streugut in einen Streuschlitz fördernde Rüttelklappe angeordnet ist, die über eine Getriebeanordnung mit der Zapfwelle einer Zugmaschine kuppelbar und von dieser in eine Schwingungsbewegung versetzbar ist, wobei in der Austragsöffnung neben der Rüttelplatte eine einstellbare Dosierklappe angeordnet ist, durch die die Breite des Streuschlitzes einstellbar ist.

Eine derartige Streumaschine ist aus der DE-U-8 709 657 bekannt. Hierbei ist die von einem Exzenter der Zapfwelle angetriebene Rüttelplatte als muldenförmiges Austragsblech angeordnet, das insgesamt nach unten geneigt ist und am oberen Ende einen Mitnehmer in Form eines Winkelblechs aufweist, das mit dem Exzenter zusammenwirkt. Dieses Austragsblech ist um eine Gelenkachse schwenkbar, die weit über dem Austragsschlitz etwa in Höhe der Zapfwellenachse liegt. Die Dosierklappe ist als Stellschieber ausgebildet, der geradlinig längs des geneigten Bodens des Vorratsbehälters verschiebbar ist und über einen zweiarmigen Hebel verstellbar ist, um die Breite des Austragsschlitzes einzustellen. Dabei ist die Anordnung derart getroffen, daß in jeder Stellung des Stellschiebers eine gleichbleibende Breite des Austragsschlitzes gewährleistet bleibt. Die Förderbewegung des Austragsbleches verläuft dabei schaufelartig auf einem Kreiszylinderabschnitt dessen Krümmungsachse über dem Austragsschlitz liegt, wodurch das Streugut durch die hin- und hergehende Bewegung nach hinten ausgetragen werden soll, wobei der Austragsschlitz oben durch die Hinterkante des Stellschiebers und unten durch die Vorderkante des Austragsblechs begrenzt ist. Hierdurch kann erreicht werden, daß eine einstellbare Länge trockenen rieselfähigen Streuguts gleichmäßig ausgetragen wird. Es können jedoch Schwierigkeiten auftreten, wenn verdichtetes oder verklebtes Material ausgetragen wird, das zum Verstopfen des Austragsschlitzes neigt.

Der Erfindung liegt daher die Aufgabe zugrunde eine gattungsgemäße Maschine derart auszubilden, daß sie noch vielseitiger einsetzbar ist und auch zum Austragen von nassem, verklebten Material Verwendung finden kann.

Gelöst wird die gestellte Aufgabe durch die im Kennzeichnungsteil des Patentanspruchs 1 angegebenen Merkmale.

Dadurch daß die Rüttelplatte um eine unter ihr liegende Gelenkachse verschwenkt wird, ergibt sich eine Bewegung auf einem nach oben konvexen zylindrischen Mantelabschnitt, wodurch das Streugut mit einer nach unten gerichteten Komponente in den Austragsschlitz gefördert wird, dessen Öffnungsweite durch Anheben bzw. Absenken der Vorderkante der Dosierklappe erreicht wird. Hierdurch ergibt sich durch die Bewegung der Rüttelklappe eine Zerkleinerung etwa verklumpten Schüttgutes, so daß sich selbst bei ungünstigem Schüttgut ein etwa gleichmäßiges Austragen ergibt, wobei ein Verstopfen verhindert wird, bzw. ein verstopfter Austragsschlitz durch die Rüttelbewegung der Klappe schnellstens wieder freigelegt wird.

Die erfindungsgemäße Streumaschine läßt sich für alle Materialien, angefangen von trockenem, feinkörnigem Sand (schmaler Streuschlitz) bis zu nassem verklebten Material (breiter Streuschlitz) einstellen.

Insbesondere ist die Erfindung auch bei einer Streumaschine der in der DE-A-31 01 670 beschriebenen Streumaschine einsetzbar, bei der durch einen Hydraulikantrieb, der als Kippermulde ausgebildete Behälter in eine Beladestellung überführbar ist. Durch die Merkmale der Ansprüche 8 und 9 wird es möglich mittels der Kippermulde in das Streugut hineinzufahren und dieses durch Kippen aufzuladen. Durch die Verstellbewegung des Behälters kann dieser gleichzeitig mit Antriebselementen für Rüttelklappe und Dosierklappe derart kuppelbar bzw. entkuppelbar sein, daß im entkuppelten Zustand der Austragsschlitz durch die Rüttelklappe in Verbindung mit der Dosierklappe geschlossen wird, was automatisch durch Federn geschehen kann. Auf diese Weise wird der Streuschlitz beim Transport automatisch geschlossen und die Rüttelklappe stillgesetzt. Soll der Streuvorgang eingeleitet werden, dann kann über den Kolbenantrieb der Behälter in die Arbeitsstellung verschwenkt werden, wobei automatisch eine Einkupplung in die Getriebe erfolgt und Rüttelklappe und Dosierklappe in der eingestellten Stellung arbeiten.

Nachstehend wird ein Ausführungsbeispiel der Erfindung anhand der Zeichnung beschrieben. In der Zeichnung zeigen:
- Fig. 1: eine schematische Seitenansicht einer erfindungsgemäß ausgebildeten Streumaschine in Arbeitsstellung;
- Fig. 2: eine Vorderansicht der in Fig. 1 dargestellten Streumaschine.

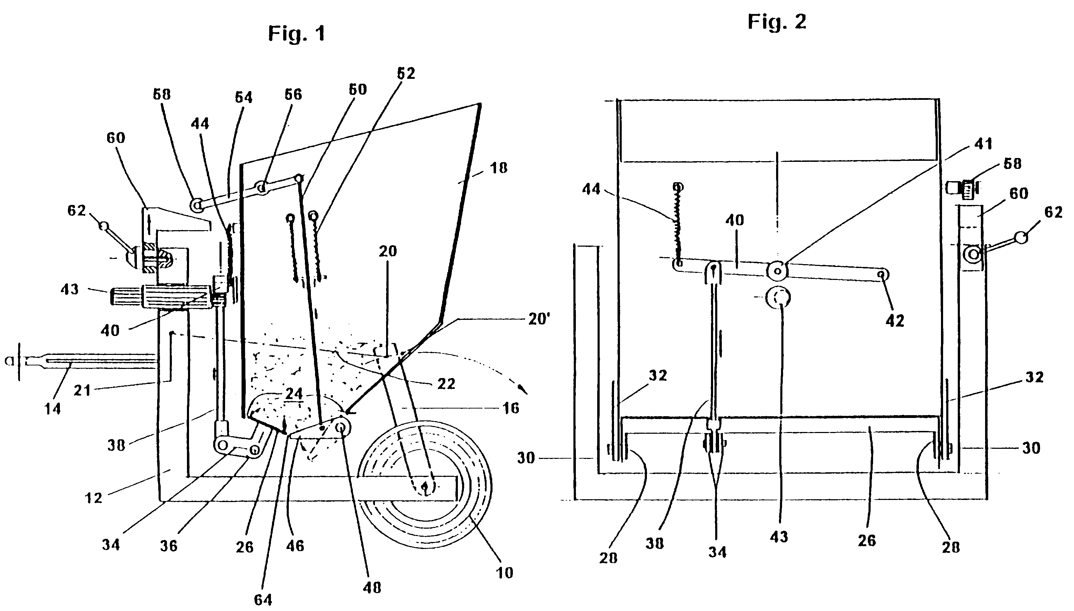

Gemäß dem dargestellten Ausführungsbeispiel ist die Streumaschine als Anhänger für einen Schlepper ausgebildet. Das Fahrgestell weist einen von Rädern 10 abgestützten Rahmen 12 auf, der über eine Anhängedeichsel 14 mit dem nicht dargestellten Schlepper verbunden werden kann. Ein Lenkerpaar 16 ist um eine zur Radachse koaxiale Achse schwenkbar am Rahmen 12 angelenkt. Die beiden Lenker 16 tragen den als Kippermulde ausgebildeten Behälter 18. Auf beiden Seiten des Behälters 18 ist ein doppeltwirkender Hydraulikkolbenantrieb 22 angeordnet, der mit dem einen Ende über einen Anlenkzapfen 21 an dem vertikalen Teil des Rahmens 12 und mit dem anderen Ende über einen Anlenkzapfen 20 am Lenker 16 angelenkt ist. Mit dem Bezugszeichen 20' ist die Lage des Anlenkzapfens in Transportstellung angegeben. Der Kolbenantrieb 22 ist in Fig. 1 schematisch als strichpunktierte Linie angegeben. Er wird durch die Schlepperhydraulik über Ventile betätigt.

Wie aus Fig 1 ersichtlich, weist der Behälter 18 eine Vorderwand und eine geneigte, nach unten konvergierende, Rückwand und zwei vertikale Seitenwände auf. Dieser als Kippermulde ausgebildete Behälter 18 weist am unteren Ende eine Austragsöffnung 24 zwischen den unteren Rändern von Vorderwand und Rückwand auf. Im vorderen Abschnitt der Austragsöffnung ist benachbart zur Vorderwand eine Rüttelklappe 26 angeordnet, die von zwei seitlichen Armen 28 getragen wird. Diese Arme 28 sind über Gelenke 30 an Tragarmen 32 angelenkt, die vom Behälter 18 nach unten vorstehen. An der Rüttelklappe 26 ist ein Winkelhebel 34 befestigt, der zusammen mit der Rüttelklappe um eine mit den Gelenken 30 fluchtende Gelenkachse 36 schwenkbar ist. Am Winkelhebel 34 greift eine vertikale Lenkerstange 38 an, deren oberes Ende an einem Hebel 40 angelenkt ist, der um einen behälterfesten Zapfen 42 schwenkbar ist. An dem gemäß Fig. 2 linken Ende des Hebels 40 greift eine Zugschraubenfeder 44 an, die am Behälter 18 verankert ist und den Hebel 40 mit der Stange 38 anhebt, wobei die Rüttelklappe den vorderen Teil der Austragsöffnung abdeckt.

Der Hebel 40 trägt eine Folgerolle 41, die von einem Exzenter 43 auf- und niederbewegt wird und somit die Rüttelklappe 26 in Schwingungsbewegung versetzt. Der Exzenter 43 wird von der Gelenkwelle des Schleppers gedreht.

Der hintere Teil der Austragsöffnung wird von einer Dosierklappe 46 eingenommen, die um eine quer am Hinterrand der Öffnung 24 verlaufende Achse 48 schwenkbar ist und in der in Fig. 1 dargestellten Stellung den hinteren Teil der Austragsöffnung 24 abschließt. An der Dosierklappe 46 greift eine Stange 50 an, die durch Federn 52 nach oben gezogen wird, um die Dosierklappe in die Schließstellung überführen. Das obere Ende der Stange 50 ist an einem Hebel 54 angelenkt, der um eine Achse 56 schwenkbar ist. Der nach vorn über den Behälter 18 vorstehende Teil des Hebels 54 trägt eine Folgerolle 58, die mit einer schiefen Ebene 60 zusammenwirkt. Diese Ebene 60 wirkt als Anschlag, ist höhenverstellbar im Rahmen 12 gelagert und durch eine Klemmschraube 62 arretierbar.

Wenn der Behälter 18 über die den Kolbenantrieb 22 betätigende Schlepperhydraulik aus der Transportstellung in die in Fig. 1 dargestellte Arbeitsstellung überführt wird, dann läuft die Folgerolle 58 auf die schiefe Ebene 60 auf und wird je nach der Höhenstellung der schiefen Ebene mehr oder weniger angehoben, wodurch die Dosierklappe mehr oder weniger geöffnet wird, so daß der zwischen dem Vorderrand der Dosierklappe 46 und dem Hinterrand der Rüttelklappe 26 gebildete Streuschlitz 64 vergrößert wird. Dabei wird auch die Folgerolle 41 in Wirkverbindung mit dem Exzenter 43 gebracht. Erforderlichenfalls kann der Exzenterhub einstellbar sein, um die Amplitude der Schwingungsbewegung der Rüttelklappe einzustellen.

Bei trockenem, feinkörnigem Sand wird die Dosierklappe 46 je nach gewünschter Ausbringmenge auf einen kleinen Spalt 64 zur Rüttelklappe 26 hin geöffnet. Soll der Besandungsvorgang unterbrochen werden, wird der Behälter über den Kolbenantrieb 22 nach hinten gekippt, und die Folgerolle 41 und die Nockenrolle 58 werden vom Exzenter 43 bzw. von der schiefen Ebene 60 abgehoben. Die Klappen 26 und 46 werden durch die Federn 44 bzw. 52 geschlossen.

Ist ein nasses, verklebendes Material auszutragen, welches einen zum Teil sogar negativen Schüttwinkel besitzt, so wird durch Anheben des Nockenbahnanschlages 60 der Streuschlitz 64 nach Wunsch vergrößert. Die sich nach dem Laden und dem Transport verdichtende Materialsäule im Behälter 18 wird durch die Rüttelklappe 26 in Bewegung gesetzt und gelockert, und das Material gleitet über die Schrägstellung der Rüttelklappe 26 zum eingestellten Streuspalt 64 und wird am Boden abgelegt.

Zum Beladen des Behälters 18 wird dieser durch den Kolbenantrieb 22 gekippt und das Gut durch die auf diese Weise seitlich gestellte Öffnung aufgenommen, und dann wird der Behälter in die aus den Fig. 1 und 2 ersichtliche Stellung bzw. in die nicht dargestellte Transportstellung zurückgekippt.

Die Fig. 1 und 2 stellen das Gerät in einer Stellung dar, in der Sand ausgetragen wird. Dabei liegen die Rollen 41 und 58 an dem Exzenter 43 bzw. dem Anschlag 60 an. In der Zeichnung sind die Rollen 41 und 58 lediglich zur Verdeutlichung abgehoben dargestellt.

## Patentansprüche

1. Streumaschine mit einem das Streugut aufnehmenden trogartigen Behälter (18), der nach unten konvergierende Wände aufweist, die in einer quer zur Fahrtrichtung verlaufenden Austragsöffnung (24) münden, in der eine das Streugut in einen Streuschlitz (64) fördernde Rüttelklappe (26) angeordnet ist, die über eine Getriebeanordnung mit der Zapfwelle einer Zugmaschine kuppelbar und von dieser in eine Schwingungsbewegung versetzbar ist, wobei in der Austragsöffnung (24) neben der Rüttelklappe (26) eine einstellbare Dosierklappe (46) angeordnet ist, durch die die Breite des Streuschlitzes (64) einstellbar ist,
dadurch gekennzeichnet, daß die Rüttelklappe (26) um eine in Querrichtung unter der Rüttelklappe (26) verlaufende Gelenkachse (36) schwingbar gelagert ist, und daß die Dosierklappe (46) um eine an der Nachlaufkante liegende Querachse (48) schwenkbar ist.

2. Streumaschine nach Anspruch 1,
dadurch gekennzeichnet, daß in Fahrtrichtung betrachtet die Rüttelklappe (26) vor der Dosierklappe (46) liegt.

3. Streumaschine nach den Ansprüchen 1 und 2,
dadurch gekennzeichnet, daß der Austragsschlitz (64) zwischen der Nachlaufkante der Rüttelklappe (26) und der Vorlaufkante der Dosierklappe (46) liegt.

4. Streumaschine nach Anspruch 1,
dadurch gekennzeichnet, daß die Rüttelklappe (26) über ein Gestänge (34, 38, 40) mit einer Folgerolle (41) in Verbindung steht, die an einem Exzenter (43) abläuft, der von der Zapfwelle der Zugmaschine angetrieben wird.

5. Streumaschine nach den Ansprüchen 1 und 4,
dadurch gekennzeichnet, daß die Folgerolle (41) durch eine Feder (44) in eine Ruhestellung überführbar ist, in der die Rüttelklappe geschlossen ist.

6. Streumaschine nach Anspruch 1,
dadurch gekennzeichnet, daß die Dosierklappe (46) über ein Gestänge (50, 54) mit einem Folgeorgan (58) verbunden ist, das mit einem einstellbaren Anschlag (60) in Wirkverbindung steht.

7. Streumaschine nach den Ansprüchen 1 und 6,
dadurch gekennzeichnet, daß die Dosierklappe durch Federn (52) in eine Schließstellung überführbar ist, wenn das Folgeorgan (58) vom Anschlag (60) abgehoben ist.

8. Streumaschine nach einem der Ansprüche 1 bis 7, mit als Kippermulde ausgebildetem Behälter (18), der durch einen Hydraulikantrieb (22) in eine Beladestellung überführbar ist,
dadurch gekennzeichnet, daß der Behälter (18) durch den Hydraulikantrieb (22) in eine Zwischenstellung überführbar ist, in der das Folgeorgan (41) vom Exzenterantrieb (43) getrennt und das Folgeorgan (58) vom Anschlag (60) abgehoben ist, so daß die Schließfedern (44 bzw. 52) wirksam werden können.

9. Streumaschine nach Anspruch 8,
dadurch gekennzeichnet, daß der Behälter (18) durch den Hydraulikantrieb (22) in eine vordere Anschlagstellung überführbar ist, in der die Folgeorgane (41, 43 bzw. 58, 60) in Wirkungseingriff miteinander stehen.

## Claims

1. Scattering machine having a trough-like container (18) which holds the material to be scattered and which has downwardly converging walls which open out in a discharge opening (24) extending at a right angle to the direction of travel and in which is disposed a vibrating flap (26) which conveys the material to be scattered into a dispersal slot (64); this vibrating flap (26) is adapted to be coupled via an arrangement of gears to the power take-off shaft of a tractor and to be set in oscillating motion by the latter; arranged in the discharge opening (24) alongside the vibrating flap (26) is an adjustable metering flap (46) which allows the width of the dispersal slot (64) to be adjusted,
characterised in that the vibrating flap (26) is mounted so as to oscillate about an articulated shaft (36) extending transversely beneath the vibrating flap (26) and that the metering flap (46) is adapted to swivel about a transverse shaft (48) situated on the trailing edge.

2. Scattering machine according to claim 1, characterised in that seen in the direction of travel the vibrating flap (26) is situated in front of the metering flap (46).

3. Scattering machine according to claims 1 and 2, characterised in that the discharging slot (64) is situated between the trailing edge of the vibrating flap (26) and the leading edge of the metering flap (46).

4. Scattering machine according to claim 1, characterised in that the vibrating flap (26) communicates via a linkage (34, 38, 40) with a follower roller (41) which travels along a cam (43) driven by the power take-off shaft of the tractor.

5. Scattering machine according to claims 1 and 4, characterised in that the follower roller (41) is adapted to be moved by a spring (44) into a rest position in which the vibrating flap is shut.

6. Scattering machine according to claim 1, characterised in that the metering flap (46) is connected via a linkage (50, 54) to a follower (58) which is operatively connected to an adjustable stop (60).

7. Scattering machine according to claims 1 and 6, characterised in that the metering flap is adapted to be moved by springs (52) into a closed position when the follower (58) is lifted away from the stop (60).

8. Scattering machine according to any of claims 1 to 7, having a container (18) in the form of a dump body which is adapted to be transferred into a loading position by a hydraulic drive (22), characterised in that the container (18) is adapted to be transferred by the hydraulic drive (22) into an intermediate position in which the follower (41) is separated from the cam drive (43) and the follower (58) is lifted off the stop (60), thereby enabling the closure springs (44 and 52, respectively) to become operative.

9. Scattering machine according to claim 8, characterised in that the container (18) is adapted to be transferred by the hydraulic drive (22) into a frontal stop setting in which the followers (41, 43 and 58, 60, respectively) are in operative engagement with one another.

## Revendications

1. Machine d'épandage, comportant un récipient (18) en forme d'auge pour le produit à épandre, avec présente des parois qui convergent vers le bas et débouchent dans une ouverture de déversement (24) qui s'étend transversalement à la direction de déplacement et dans laquelle est disposé un volet oscillant (26) qui amène le produit à épandre dans une fente d'épandage (64), est couplé par l'intermédiaire d'un mécanisme à la prise de force d'un tracteur et peut être mis en oscillation par celle-ci, un volet de dosage (46) réglable, à l'aide duquel la largeur de la fente d'épandage (64) peut être réglée, étant disposé dans l'ouverture de sortie (24), à proximité du volet oscillant (26), caractérisée en ce que le volet oscillant (26) est monté avec possibilité d'oscillation autour d'un axe d'articulation (36) qui s'étend dans la direction transversale au-dessous du volet oscillant (26) et en ce que le volet de dosage (46) est monté pivotant autour d'un axe transversal situé sur son bord arrière.

2. Machine d'épandage selon la revendication 1, caractérisée en ce que, vu dans la direction de déplacement, le volet oscillant (26) est disposé devant le volet de dosage (46).

3. Machine d'épandage selon la revendication 1, caractérisée en ce que la fente d'épandage (64) est située entre le bord arrière du volet oscillant (26) et le bord avant du volet de dosage (46).

4. Machine d'épandage selon la revendication 1, caractérisée en ce que le volet oscillant (26) est relié par l'intermédiaire d'une tringlerie (34, 38, 40) à un galet suiveur (41) qui roule sur un excentrique (43) entraîné par la prise de force du tracteur.

5. Machine d'épandage selon les revendications 1 et 4, caractérisée en ce que le galet suiveur (41) peut être amené au moyen d'un ressort (44) dans une position de repos dans laquelle le volet oscillant est fermé.

6. Machine d'épandage selon la revendication 1, caractérisée en ce que le volet de dosage (46) est relié par l'intermédiaire d'une tringlerie (50, 54) à un organe suiveur (58) qui coopère avec une butée (60) réglable.

7. Machine d'épandage selon une des revendications 1 à 6, caractérisée en ce que le volet de dosage (46) peut être amené au moyen de ressorts (52) dans une position de fermeture lorsque l'organe suiveur (58) est soulevé de la butée (60).

8. Machine d'épandage selon une des revendications 1 à 7, comportant un récipient (18) agencé sous la forme d'une benne basculante qui peut être amenée dans une position de chargement au moyen d'une commande hydraulique, caractérisée en ce que le récipient (18) peut être amené à l'aide de la commande hydraulique (22) dans une position intermédiaire dans laquelle l'organe suiveur (41) est décollé du mécanisme d'entraînement à excentrique (43) et l'organe suiveur (58) est soulevé de la butée (60), de telle sorte que les ressorts de fermeture (44 et 52) peuvent agir.

9. Machine d'épandage selon la revendication 8, caractérisée en ce que le récipient (18) peut être amené à l'aide de la commande hydraulique (22) dans une position de butée avant, dans laquelle les organes suiveurs (41, 43 et 58, 60) coopèrent les uns avec les autres.
